# EUROPEAN PATENT APPLICATION

(11) **EP 2 312 568 A1**
(43) Date of publication of application: **20.04.2011**
(21) Application number: 10187545.8
(22) Date of filing: 14.10.2010
(51) Int. Cl.: G09G 3/34

(54) **Method for controlling operation of display apparatus according to quantity of incident external light and display apparatus using the same**

(30) Priority: 19.10.2009 KR 20090099331
(71) Applicant: SAMSUNG ELECTRONICS CO., LTD., Suwon-si Gyeonggi-do 442-742 (KR)
(72) Inventor: Cho, Jeong-a, Gyeonggi-do (KR); Koh, Sang-hyun, Gyeonggi-do (KR)
(74) Representative: Jacobs, Bart

(57) **Abstract**

A method for controlling an operation of a display apparatus according to the quantity of incident external light and a display apparatus using the same are provided. The display apparatus controls an operating mode thereof according to the quantity of external light incident to a surface on a display. Therefore, unnecessary power consumption may be eliminated, and an unintended command may be prevented from being mistakenly input and performed.

## Description

This application claims priority under 35 U.S.C. § 119 from Korean Patent Application No. 10-2009-0099331, filed on October 19, 2009, in the Korean Intellectual Property Office, the disclosure of which is incorporated herein by reference in its entirety.

Apparatuses and methods consistent with the present invention relate to a display apparatus, and more particularly, to a display apparatus which displays contents stored in the display apparatus or contents received from an external source on a display, and thus enables a user to view the contents.

Since usual display apparatuses support a backlight function which allows a user to view contents despite dark conditions, it is sometimes possible for the user to visually recognize the contents under dark conditions better than under light conditions.

While such display apparatuses might permit a user to be able to more clearly recognize colors, and while it may be easier to view a screen under both artificial light and dark conditions, a user's eyes may get tired more easily and it may be more difficult to view a screen under the sun.

Some devices for reading for long periods of time, such as some electronic book (e-book) readers, employ an electronic paper display (EPD) which does not have a backlight.

However, when using the EPD a user may not be able to view contents displayed on a screen if there is no external light, and it may be difficult to check the state of the power supply. In addition, even when the user is not using the EPD, power still may have to be supplied to display an image on the screen, and to be able to receive a touch input. As a result, power may be wasted.

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

An aspect of the present invention provides a display apparatus for controlling an operating mode based on the quantity of external light incident to a surface on a display which is not visible if there is no external light, and a method for controlling an operating mode of the display apparatus.

Another aspect of the present invention provides a method for reducing power consumption when all or substantial part of a display is hidden and thus a user cannot view a screen normally.

Exemplary embodiments of the present invention may prevent unnecessary power consumption when a display apparatus is in an abnormal operating condition after determining whether the display is in a normal operating condition using the quantity of incident external light.

According to an exemplary aspect of the present invention, there is provided a display apparatus, including a display; a sensing unit which detects a quantity of external light incident to a surface on the display; and a controlling unit which controls an operating mode of the display apparatus according to the quantity of external light detected by the sensing unit.

The display apparatus as claimed in claim 1, wherein the display displays content without using a backlight.

According to another exemplary aspect of the present invention, the detection unit may detect the quantity of external light incident to the surface on the display using at least one optical sensor provided around a periphery of the display.

According to another exemplary aspect of the present invention, if the quantity of external light detected by the sensing unit may be less than a reference quantity of light, the controlling unit may change the operating mode of the display apparatus into a power saving mode.

According to another exemplary aspect of the present invention, the power saving mode may include a mode in which the display is inactivated.

According to another exemplary aspect of the present invention, the display apparatus may further include: a touchscreen through which a user command is input by touch, wherein the power saving mode may include a mode in which at least one of the display and the touchscreen is inactivated.

According to another exemplary aspect of the present invention, the sensing unit may detect the quantity of external light incident to the surface on the display using a plurality of optical sensors which are positioned on different portions around a periphery of the display, and the controlling unit may determine whether a user is capable of viewing the display using the result detected by the sensing unit, and may control the operating mode of the display apparatus using the determination result.

Another exemplary embodiment of the present invention provides a method for controlling an operating mode of a display apparatus having a display and a sensing unit, wherein the method may include: detecting a quantity of external light incident to a surface on a display; and controlling an operating mode of the display apparatus according to the quantity of external light detected by the sensing unit.

According to another exemplary aspect of the present invention, the display may include an electronic paper display (EPD).

According to another exemplary aspect of the present invention, the detecting may detect the quantity of external light incident to the surface on the display using at least one optical sensor provided around a periphery of the display.

According to another exemplary aspect of the present invention, if the quantity of external light detected by the detecting is less than a reference quantity of light, the controlling may change the operating mode of the display apparatus into a power saving mode.

According to another exemplary aspect of the present invention, the power saving mode may include a mode to inactivate the display.

According to another exemplary aspect of the present invention, the power saving mode may include a mode to inactivate at least one of the display and a touchscreen which may be used to input a user command by touch.

According to another exemplary aspect of the present invention, the detecting may detect the quantity of external light incident to the surface on the display using a plurality of optical sensors which are positioned on different portions around a periphery of the display, and the controlling may determine whether a user is capable of viewing the display using the result detected by the detecting, and controls the operating mode of the display apparatus using the determination result.

The above and/or other aspects of the present invention will be more apparent by describing certain exemplary embodiments of the present invention with reference to the accompanying drawings, in which:
FIG. 1 is a block diagram illustrating an electronic book (e-book) reader according to an exemplary embodiment of the present invention;
FIG. 2 is a view illustrating positioning of four optical sensors of a sensing unit, an example of which is shown in FIG. 1;
FIG. 3 is a flowchart provided to explain a method for controlling an operating mode of an e-book reader according to an exemplary embodiment of the present invention;
FIG. 4 is a flowchart provided to explain a method for controlling an operating mode of an e-book reader according to another exemplary embodiment of the present invention; and
FIGS. 5(a) to 5(f) illustrate cases in which a user cannot view contents displayed on an electronic paper display (EPD), and cases in which a user can view contents displayed on an EPD.

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

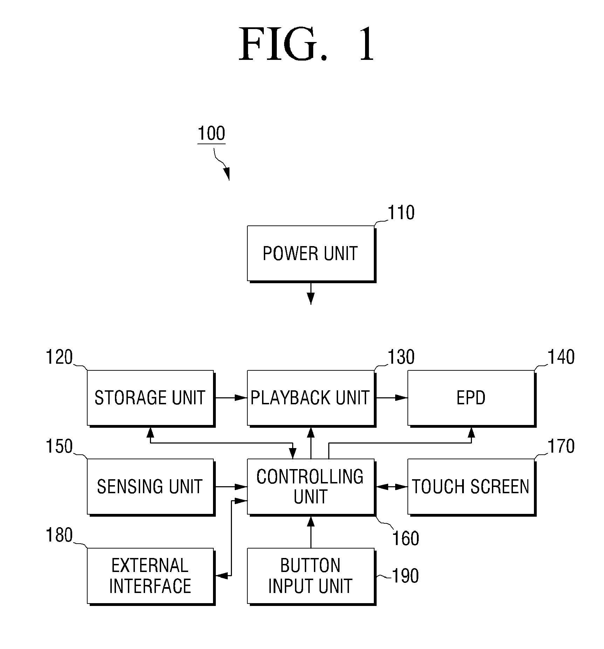

FIG. 1 is a block diagram illustrating an electronic book (e-book) reader 100 according to an exemplary embodiment of the present invention. Referring to FIG. 1, the e-book reader 100 according to the exemplary embodiment of the present invention comprises a power unit 110, a storage unit 120, a playback unit 130, an electronic paper display (EPD) 140, a sensing unit 150, a controlling unit 160, a touchscreen 170, an external interface 180, and a button input unit 190.

The power unit 110 supplies power to elements which require power among elements constituting the e-book reader 100. The storage unit 120 provides a storage space which stores e-books which have been generated as electronic files. The playback unit 130 plays back an e-book stored in the storage unit 120.

The EPD 140 is a display element which displays an e-book played back by the playback unit 130. The EPD 140 displays contents without using a backlight. That is, the EPD 140 does not require a backlight when displaying an e-book. If the quantity of external light incident to the EPD is insufficient, a user may not be able to view contents displayed on the EPD 140. Further, the display may be a display through which contents are not visible if there is no external light.

The sensing unit 150 detects the quantity of external light incident to a surface on the EPD 140. The sensing unit 150 may detect the quantity of external light incident to the surface on the EPD 140 using four optical sensors provided (i.e., disposed) around a periphery of the EPD 140.

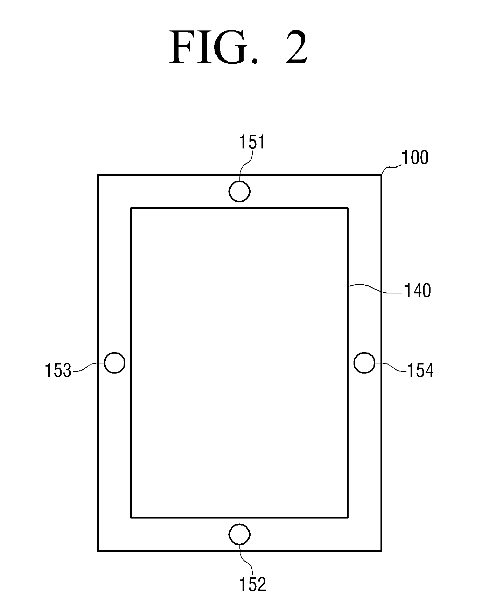

FIG. 2 illustrates positioning of the four optical sensors constituting the sensing unit 150. Referring to FIG. 2, the four optical sensors 151, 152, 153, and 154 are positioned on an upper portion, a lower portion, a left portion, and a right portion of the EPD 140.

The touchscreen 170 is provided on a bottom portion of the EPD 140, and recognizes a command input by a user's touch.

The external interface 180 is connected to an external device or external network to communicate with each other, and downloads an e-book from the external device or the external network. The e-book downloaded through the external interface 180 may be stored in the storage unit 120.

The button input unit 190 is provided around the EPD 140, and recognizes a command input by a user pressing buttons.

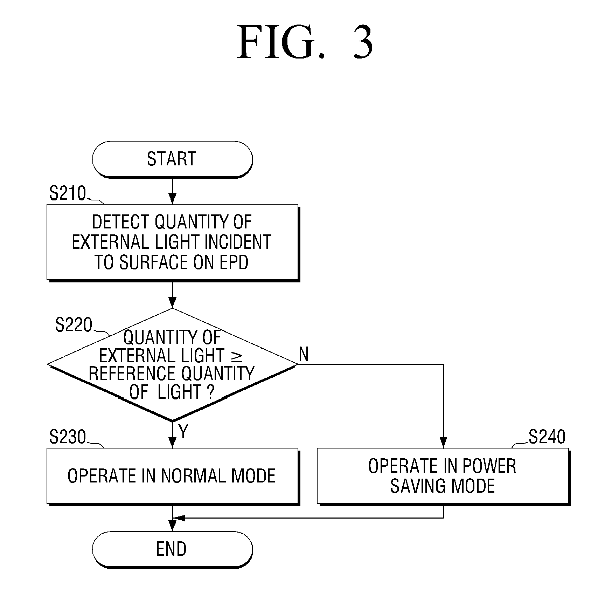

The controlling unit 160 controls an operating mode of the e-book 100 according to the quantity of external light detected by the sensing unit 150, which will be explained in detail with reference to FIG. 3.

Referring to FIG. 3, the sensing unit 150 detects the quantity of external light incident to the surface on the EPD 140 (S210). The result detected by the sensing unit 150 in operation S210 may be transferred to the controlling unit 160.

The controlling unit 160 compares the quantity of external light detected in operation S210 with a reference quantity of light (S220). It has been described that if the quantity of external light incident to the EPD 140 is insufficient, a user may not view contents displayed on the EPD 140. The reference quantity of light to be compared with the quantity of external light in operation S220 indicates the quantity of external light which enables a user to view contents displayed on the EPD 140.

If it is determined that the quantity of external light is greater than the reference quantity of light (S220-Y), the controlling unit 160 operates the e-book reader 100 in a normal mode (S230). The normal mode is a mode to operate the e-book reader 100 according to a command input by a user. In more detail, in the normal mode, 1) an e-book, which a user commands to be executed, is played back on the playback unit 130 and is displayed on the EPD 140, and 2) a user command input through the touchscreen 170 is performed.

If it is determined that the quantity of external light is less than the reference quantity of light (S220-N), the controlling unit 160 operates the e-book reader 100 in a power saving mode (S240). The power saving mode is a mode in which 1) the playback unit 130 and the EPD 140 are inactivated, and 2) the touchscreen 170 is inactivated.

Inactivating the playback unit 130 and the EPD 140 may be executed by the operation that the controlling unit 160 blocks power supplied from the power unit 110 to the playback unit 130 and the EPD 140. Inactivating the touchscreen 170 may be executed by the operation of blocking power supplied to the touchscreen 170 or the operation of ignoring a command input by a user using the touchscreen 170.

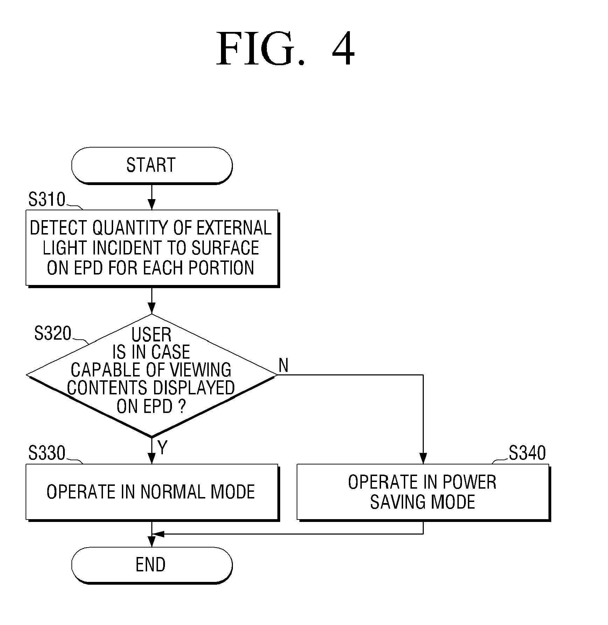

Hereinbelow, another method that the controlling unit 160 controls an operating mode of the e-book reader 100 according to the quantity of external light detected by the sensing unit 150 will be explained in detail with reference to FIG. 4.

Referring to FIG. 4, the sensing unit 150 detects the quantity of external light incident to the surface on the EPD 140 for each portion (S310). The result detected by the sensing unit 150 in operation S310 is transferred to the controlling unit 160.

The sensing unit 150 comprises the four optical sensors 151, 152, 153, and 154 positioned on an upper portion, a lower portion, a left portion, and a right portion of the EPD 140 as shown in FIG. 2. Accordingly, detection of the quantity of external light in operation S310 may be performed in each portion of the EPD 140. It should be noted that the use of four optical sensors, such as shown in FIG. 2, is merely exemplary. Other exemplary embodiments of the present invention may alternatively employ a different number of optical sensors.

In more detail, 1) the quantity of external light detected by the first optical sensor 151 is the quantity of external light incident to the upper portion of the EPD 140, 2) the quantity of external light detected by the second optical sensor 152 is the quantity of external light incident to the lower portion of the EPD 140, 3) the quantity of external light detected by the third optical sensor 153 is the quantity of external light incident to the left portion of the EPD 140, and 4) the quantity of external light detected by the fourth optical sensor 154 is the quantity of external light incident to the right portion of the EPD 140.

The controlling unit 160 determines whether a user is capable of viewing contents displayed on the EPD 140 according to the quantity of external light for each portion detected in operation S310 (S320).

If it is determined that a user is capable of viewing contents displayed on the EPD 140 (S320-Y), the controlling unit 160 may operate the e-book reader 100 in a normal mode (S330).

On the other hand, if it is determined that a user is incapable of viewing contents displayed on the EPD 140 (S320-N), the controlling unit 160 may operate the e-book reader 100 in a power saving mode (S340).

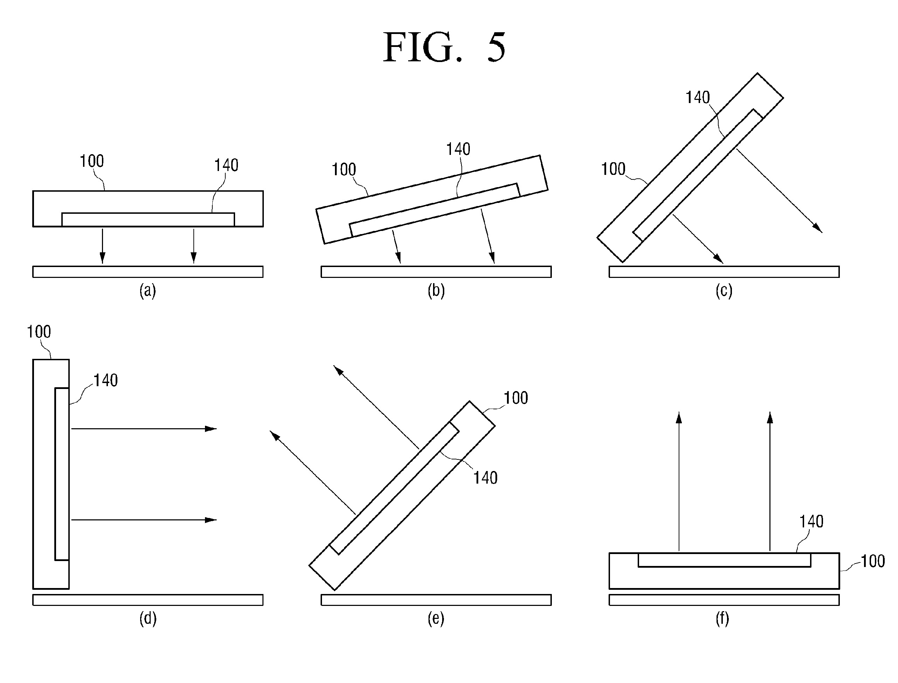

FIG. 5 illustrates the e-book 100, wherein views (a) to (c) show examples in which a user cannot view contents displayed on an electronic paper display (EPD) while views (d) to (f) show examples in which a user can view contents displayed on an EPD.

Hereinabove, the process of determining whether a user is capable of viewing contents displayed on the EPD 140 with reference to the quantity of external light incident to the surface on the EPD 140, and controlling an operating mode of the e-book 100 according to the determination result has been explained in detail according to the exemplary embodiments of the present invention.

The EPD used in the exemplary embodiments of the present invention is an example of a display element which does not use a backlight. Accordingly, any display which does not use a backlight may be replaced with the EPD.

The number, size and location of the optical sensors provided on the e-book reader are also merely exemplary. Therefore, the optical sensors may be implemented in a different manner (e.g. in different numbers, locations, etc.).

The e-book reader is merely an example of a display apparatus. Technical aspects of the present invention may be applied to other types of display apparatuses.

As described above, according to the exemplary embodiments of the present invention, an operating mode of a display apparatus may be controlled according to the quantity of external light incident through a display, thereby eliminating unnecessary power consumption and preventing an unintended command from being mistakenly input and performed.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display apparatus comprising:
a display;
a sensing unit which detects a quantity of external light incident to a surface on the display; and
a controlling unit which controls an operating mode of the display apparatus according to the quantity of external light detected by the sensing unit.

2. The display apparatus as claimed in claim 1,
wherein the display displays content without using a backlight.

3. The display apparatus as claimed in claim 2,
wherein the display comprises an electronic paper display (EPD).

4. The display apparatus as claimed in one of claims 1 to 3, wherein the detection unit detects the quantity of external light incident to the surface on the display using at least one optical sensor provided around a periphery of the display.

5. The display apparatus as claimed in one of claims 1 to 4, wherein if the quantity of external light detected by the sensing unit is less than a reference quantity of light, the controlling unit changes the operating mode of the display apparatus into a power saving mode.

6. The display apparatus as claimed in claim 5,
wherein the power saving mode comprises a mode in which the display is inactivated.

7. The display apparatus as claimed in one of claims 4 to 6, further comprising:
a touchscreen through which a user command is input by touch,
wherein the power saving mode comprises a mode in which at least one of the display and the touchscreen is inactivated.

8. The display apparatus as claimed in one of claims 1 to 7, wherein
the sensing unit detects the quantity of external light incident to the surface on the display using a plurality of optical sensors which are positioned on different portions around a periphery of the display, and
the controlling unit determines whether a user is capable of viewing the display using the result detected by the sensing unit, and controls the operating mode of the display apparatus using the determination result.

9. A method for controlling an operating mode of a display apparatus having a display and a sensing unit, the method comprising:
detecting a quantity of external light incident to a surface on a display; and
controlling an operating mode of the display apparatus according to the quantity of external light detected by the sensing unit.

10. The method as claimed in claim 9, wherein the display displays contents without using a backlight.

11. The method as claimed in one of claims 9 and 10,
wherein the detecting detects the quantity of external light incident to the surface on the display using at least one optical sensor provided around a periphery of the display.

12. The method as claimed in one of claims 9 to 11,
wherein if the quantity of external light detected by the detecting is less than a reference quantity of light, the controlling changes the operating mode of the display apparatus into a power saving mode.

13. The method as claimed in claim 12, wherein the power saving mode comprises a mode to inactivate the display.

14. The method as claimed in one of claims 12 and 13,
wherein the power saving mode comprises a mode to inactivate at least one of the display and a touchscreen which is used to input a user command by touch.

15. The method as claimed in one of claims 9 to 14,
wherein
the detecting detects the quantity of external light incident to the surface on the display using a plurality of optical sensors which are positioned on different portions around a periphery of the display, and
the controlling determines whether a user is capable of viewing the display using the result detected by the detecting, and controls the operating mode of the display apparatus using the determination result.
